# FASCICULE DE BREVET EUROPEEN

(11) **EP 3 785 463 B1**
(45) Date de publication et mention de la délivrance du brevet: **21.09.2022**
(21) Numéro de dépôt: 19719309.7
(22) Date de dépôt: 26.04.2019
(51) Int. Cl.: H04W 24/02, H04W 88/16

(54) **PROCÉDÉ DE FÉDÉRATION D'AU MOINS DEUX RÉSEAUX DE COMMUNICATION POUR TERMINAUX MOBILES ET RÉSEAU APTE À ÊTRE FÉDÉRÉ**
VERFAHREN ZUR FÖDERIERUNG VON MINDESTENS ZWEI KOMMUNIKATIONSNETZEN FÜR MOBILE ENDGERÄTE UND FÖDERIERFÄHIGES NETZWERK
METHOD FOR FEDERATING AT LEAST TWO COMMUNICATION NETWORKS FOR MOBILE TERMINALS AND NETWORK CAPABLE OF BEING FEDERATED

(30) Priorité: 27.04.2018 FR 1853759
(43) Date de publication de la demande: 03.03.2021
(73) Titulaire: Airbus Defence and Space SAS, 31402 Toulouse Cedex 4 (FR)
(72) Inventeur: SCHOLLER, Franck, 78100 Saint Germain en laye (FR); PEREZ, Jean-François, 31500 TOULOUSE (FR); MONTENOT, Jean-Marc, 78960 Voisins le Bretonneux (FR); VOSSEN, Wannes, 31650 Saint-Orens-de-Gameville (FR)
(74) Mandataire: Cabinet Camus Lebkiri
(86) Numéro de dépôt international: PCT/EP2019/060705
(87) Numéro de publication internationale: WO 2019/207090

(56) Documents cités:
- US-A1- 2014 254 430
- US-A1- 2015 257 051

## Description

### DOMAINE TECHNIQUE DE L'INVENTION

L'invention a pour objet un procédé de fédération d'au moins deux réseaux de communication pour terminaux mobiles.

Le domaine de l'invention est notamment celui des bulles tactiques. Plus précisément le domaine de l'invention est celui de la coopération d'au moins deux réseaux de communication tels de que des bulles tactiques.

Le domaine de l'invention est aussi celui de la continuité des accès mobiles sur les théâtres d'opérations.

### ETAT DE LA TECHNIQUE

Pour les communications mobiles sensibles on connait des moyens de sécurisation des dites communications mobiles s'appuyant sur un réseau LTE public. Des communications mobiles sensibles sont, par exemple :
- Les communications des forces de l'ordre ou de sécurité civile ;
- Les communications militaires ;
- Les communications des Opérateurs d'Infrastructures Vitales, par exemple des installations de production d'énergie ;

Dans la suite du document, on entend par forces d'intervention les forces telles que citées précédemment amenées à intervenir sur un théâtre d'opération pour résoudre une situation de crise et le besoin de communiquer de manière sécurisée en tout lieu est critique pour la bonne résolution de la situation de crise.

Dans l'état de la technique, les communications devant être sécurisées se font en connexion avec un orchestrateur central qui protège par exemple l'accès à une application sensible. Les communications sont de plus effectuées en utilisant des tunnels cryptés. Cette solution permet à tous les utilisateurs connus de l'orchestrateur de :
- Se connecter aux applications sensibles,
- Communiquer entre eux,
- Se déplacer tout en maintenant les communications, il est en effet connu de réaliser un transfert intercellulaire (handover selon la terminologie anglaise) dans un réseau mobile où l'ensemble de la structure LTE est déterminé, ce qui est le cas des réseaux publics ou fixes.

Dans l'état de la technique les communications sécurisées sont dépendantes de la disponibilité d'un réseau mobile public. Or ce réseau peut être rendu indisponible pour de multiples raisons :
- Destruction d'une partie de l'infrastructure publique, en particulier de la partie radio de par la visibilité des stations de bases ;
- Saturation de l'infrastructure, par exemple, quand les forces de l'ordre interviennent à un endroit, leur présence et la raison de leur présence est susceptible de susciter la curiosité et l'inquiétude des personnes présentes dans le voisinage ce qui va augmenter le flux des communications et entrainer une surconsommation des ressources de communication ;
- Brouillage des communications ou attaque de l'infrastructure de communication public ;
- Besoin d'intervenir dans une zone non couverte par le réseau public.

Ce problème est, dans l'état de la technique, partiellement adressé par le déploiement d'une bulle tactique. Ce déploiement permet aux utilisateurs de la bulle tactique d'être indépendants de toute autre infrastructure pour leurs communications.

### PROBLEME TECHNIQUE

Cependant, avec les solutions de l'état de la technique, de nouveaux problèmes apparaissent.

Ainsi les forces d'intervention disposent de bulles tactiques consistant en un réseau de communication mobile de type LTE autonome permettant, à des équipements utilisateurs référencés sur ce réseau tactique de communiquer entre eux sur le terrain de manière autonome et sécurisée.

Chaque bulle dispose de l'ensemble des équipements d'un réseau de télécommunication mobile de type LTE, en particulier la station de base de la bulle tactique nommée eNodeB selon la technologie LTE, la base de données des utilisateurs nommée HSS (Home Subscriber Server) selon la technologie LTE, l'équipement PCRF, les passerelles de service PGW (Packet Data Network Gateway) et SGW (Serving Gateway), l'entité MME (Mobility Management Entity) et l'entité AF (Application Function) permettant l'accès aux serveurs d'application. Chaque bulle gère sa propre flotte d'équipements utilisateur, leur accès aux ressources radio et la mise en place des communications entre eux et vers les applications métiers, au travers de ses équipements. Chaque bulle est configurée au plus juste en fonction de la flotte d'équipements utilisateur qu'elle doit accueillir ce qui permet d'utiliser des équipements aux capacités réduites par rapport aux équipements d'un réseau de télécommunication mobile public standard, les rendant ainsi déplaçables et transportables plus facilement et d'un cout moindre.

Lorsque plusieurs bulles tactiques des forces d'intervention sont déployées sur le terrain, ces bulles tactiques peuvent être amenées à être positionnées à proximité les unes des autres. Cette proximité géographique des bulles tactiques induit plusieurs problèmes :
- Les fréquences radio et l'identifiant de réseau de ces bulles tactiques étant identiques, leur proximité provoque des interférences au niveau des zones de recouvrement de la couverture radio qui nuisent à la qualité des communications ;
- Chaque bulle tactique gérant sa propre flotte d'équipements utilisateur sur un réseau radio de même nature et de même spectre, un équipement utilisateur référencé dans une bulle A se trouvant dans la zone de couverture de la bulle B va tenter de s'accrocher la bulle B sans succès car il n'est pas référencé sur la bulle A et une fois décroché du réseau de la bulle A il ne pourra plus se reconnecter automatiquement à cette dernière ;
- Les bulles tactiques pouvant avoir des configurations identiques définies en usine (HSS ayant le même nom, eNodeB paramétré de manière identique pour chaque bulle), cela provoque un certain nombre d'incohérences réseau lorsque ces bulles sont situées à proximité les unes des autres.

L'une des solutions proposées par l'art antérieur pour résoudre le problème, consiste à provisionner dans la configuration usine de chaque bulle tactique, l'ensemble de la flotte des équipements utilisateur et des profils utilisateurs des forces d'intervention. Ainsi, lorsque les bulles sont à proximité les unes des autres, l'une des bulles est éteinte et pour que les équipements utilisateur s'accrochent à l'autre bulle tactique maintenue en opération. Cette approche présente toutefois plusieurs inconvénients :
- Chaque bulle doit être provisionnée avec le nombre total d'équipements utilisateur gérés par les forces d'intervention et nécessite donc des équipements aux capacités les plus élevées possibles pour chaque bulle tactique donc très onéreux et plus difficilement transportables.
- Le basculement des équipements utilisateur vers la bulle maintenue en opération induit l'interruption des communications
- Enfin, le basculement des équipements utilisateurs sur l'infrastructure d'une seule bulle tactique impose un partage de l'accès aux serveurs d'application de cette bulle avec tous les utilisateurs du réseau alors que dans certains cas de figure les serveurs d'application doivent être dédiées à une bulle tactique donnée et son accès restreint exclusivement aux utilisateurs de cette bulle tactique.

### RESUME DE L'INVENTION

L'invention apporte une réponse aux problématiques ci-dessus en permettant de fédérer une ou plusieurs bulles de communication mobile entre elles lorsqu'elles sont à proximité les unes des autres, tout en :
- Garantissant un dimensionnement au plus juste de chaque bulle tactique,
- En assurant la continuité des communications sans interruption de service et leur qualité essentielle pour des communications critiques (pendant la mise en place de la fédération des bulles entre elles) ;
- En maintenant le cas échéant l'accès aux serveurs d'application de chaque bulle fédérée à leurs utilisateurs respectifs et
- En mettant en place la fédération des bulles de manière entièrement automatique sans intervention d'un opérateur.

Grâce à l'invention, un premier réseau de type LTE et un deuxième réseau de type LTE peuvent être déployés et reliés entre eux de façon à ce que :
- Les terminaux mobiles connectés aux deux réseaux puissent communiquer entre eux ;
- Un terminal initialement connecté au premier réseau puisse se connecter au deuxième réseau et ne subisse pas de perte de service ou de communication. L'invention permet donc un handover entre deux réseaux qui ne se connaissaient pas a priori (c'est-à-dire, par exemple, deux bulles mobiles qui ne connaissent pas leur structure a priori).

Dans ces cas au moins un des deux réseaux est une bulle tactique.

Dans le présent document une bulle tactique est un réseau de communication pour terminaux mobiles. Techniquement une bulle tactique est un réseau cellulaire comportant au moins une cellule radio, un cœur de réseau et une application ou une interface avec l'extérieur de la bulle tactique. Une bulle tactique a vocation à être mobile, au minimum déplaçable en fonction de besoins de communications. Vue d'un terminal utilisateur une bulle tactique est un réseau LTE (Long Term Evolution pour Evolution sur le Long Terme) comportant un nombre réduit de stations de base, le plus souvent une seule. En d'autres termes, une bulle tactique représente un mini réseau similaire à un réseau opérateur comportant une interface radio et permettant d'accéder à des applications.

Dans le présent document, on entend par communications mobiles des communications réalisées via des terminaux mobiles de type téléphone intelligent (smartphone en anglais) utilisant des réseaux de communications de type LTE ou plus récents. Ce type comporte les dispositifs de traitement utilisant des modems LTE. Ce type inclut aussi les objets intelligents connectés. En particulier il s'agit de communications s'effectuant via une infrastructure intermédiaire : le réseau LTE.

Dans ce document on dit que l'on fédère deux réseaux de communication tels que deux bulles tactiques, c'est-à-dire que l'on met en œuvre un procédé permettant de fédérer les modules radio et les éléments de cœur de réseau des deux bulles initiales pour les faire fonctionner comme un seul réseau LTE.

Chaque bulle comporte un orchestrateur qui permet la fédération des bulles tactiques. Une fois les bulles fédérées les communications de groupe, vidéo, data, applicatives, sont possibles en continuité dans toute la zone couverte par les bulles tactiques.

Par exemple, pour une situation requérant l'intervention d'une équipe des forces de l'ordre, par exemple le GIGN, et d'une équipe des forces de sécurité civile, par exemple les pompiers, chaque équipe garde seulement l'accès à ses applications spécifiques (par exemple une base de données de la police, à des serveurs video, etc...), tout en permettant à l'autre équipe d'utiliser ses ressources de communication.

Dans l'invention les deux bulles tactiques sont connectées via une liaison dédiée. Les bulles s'accordent sur leur rôle. Une bulle tactique devient maître, l'autre esclave. L'élection d'une bulle maître peut se faire selon plusieurs critères, du premier arrivé premier servi, à la prise en compte des capacités d'accueil et de traitement de chaque bulle (i.e. on élira de préférence la bulle capable de gérer le plus grand nombre d'équipements utilisateur). Cela permet, par exemple, de s'assurer que tous les utilisateurs seront correctement gérés. Les orchestrateurs de chaque bulle tactique réalisent un mappage des transmissions par reconfiguration des réseaux et de la liaison locale.

La liaison locale entre les deux bulles tactiques peut être établie par Wifi, LTE, c'est-à-dire une connexion sans fil. La liaison locale peut aussi être établie par Ethernet ou Fibre, c'est à dire une connexion câblée reliant les deux bulles tactiques.

L'invention a donc pour objet un procédé de fédération d'un premier réseau de communication pour terminaux mobiles et d'un deuxième réseau de communication pour terminaux mobiles chaque réseau de communication comportant une station de base, un gestionnaire de mobilité, une passerelle de service, une base de données utilisateurs, un gestionnaire de politique de communication, une passerelle de paquet chacun desdits réseaux comportant en outre un routeur et un orchestrateur, le procédé comportant les étapes suivantes :
- Etablissement d'une connexion dédiée entre les deux réseaux de communication par l'établissement d'une connexion entre les routeurs ;
- Election d'un orchestrateur maître parmi les orchestrateurs des réseaux à fédérer, définissant un réseau maître et un réseau esclave ;
- Mise à jour de la base de données utilisateurs du réseau maître à partir de la base de données utilisateur du réseau esclave ;
- Configuration des liens entre :
   ∘ La passerelle de service du réseau maître et le gestionnaire de mobilité du réseau esclave ;
   ∘ La passerelle de service du réseau esclave et le gestionnaire de mobilité du réseau maître ;
   ∘ Le gestionnaire de mobilité du réseau maître et le gestionnaire de mobilité du réseau esclave ;
- Configuration du réseau esclave pour qu'il utilise :
   ∘ La base de données utilisateurs du réseau maître ;
   ∘ Le gestionnaire de politique de communication du réseau maître.

Selon des modes de réalisation l'invention présente également les caractéristiques suivantes considérées dans toutes les combinaisons techniques réalisables :
- Chaque réseau de communication a le même plan d'adressage, le procédé comportant une étape dans laquelle le routeur de chaque réseau est dynamiquement configuré, par l'orchestrateur de son réseau, pour réaliser une traduction d'adresse une pour une réciproque entre les deux réseaux ;
- Le procédé comporte les étapes suivantes :
   ∘ Mise à jour de chaque station de base en fonction de la station de base voisine ;
   ∘ Mise à jour de la liste des passerelles de service de chaque réseau, chaque passerelle de service étant associée à un code de zone en fonction de son réseau d'origine.
   ∘ Mise à jour de chaque gestionnaire de mobilité en fonction de la configuration du gestionnaire de mobilité du réseau voisin.
- L'établissement de la connexion dédiée est réalisé par l'utilisation d'un moyen de connexion appartenant à la liste formée d'au moins :
   ∘ Un câble,
   ∘ Une connexion sans fil.
- Les communications effectuées via la connexion dédiée le sont en utilisant un réseau privé virtuel.
- L'utilisation, par le réseau esclave, d'éléments du réseau maître se fait par la configuration, dans les réseaux esclave des éléments secondaires.
- La configuration des éléments secondaires se fait par nommage, la résolution des noms étant configurée par l'orchestrateur du réseau au moment de la fédération.
- Un réseau de communication pour terminaux mobiles est une bulle réseau autonome.
- L'élection de l'orchestrateur maître se fait en fonction des capacités de traitement de la bulle à laquelle appartient l'orchestrateur.
- L'accès aux fonctions applicatives d'une bulle est maintenu et est limité à ses utilisateurs d'origine.

L'invention a également pour objet un réseau de communication pour terminaux mobiles, dit premier réseau, adapté pour être fédéré, avec un deuxième réseau de communication pour terminaux mobiles adapté pour être fédéré, un réseau de communication pour terminaux mobiles adapté pour être fédéré comportant une station de base, un gestionnaire de mobilité, une passerelle de service, une base de données utilisateurs, un gestionnaire de politique de communication, une passerelle de paquet, chaque réseau de communication comportant en outre un routeur et un orchestrateur, ledit premier réseau de communication étant configuré pour:
- Etablir une connexion dédiée avec un deuxième réseau de communication par l'établissement d'une connexion dédiée entre le routeur du premier réseau et le routeur du deuxième réseau ;
- Elire un orchestrateur maître parmi les orchestrateurs du premier et deuxième réseau à fédérer, définissant un réseau maître et un réseau esclave ;
- Mettre à jour de la base de données utilisateurs du réseau maître à partir de la base de données utilisateurs du réseau esclave ;
- Configurer des liens entre :
   ∘ La passerelle de service du réseau maître et le gestionnaire de mobilité du réseau esclave ;
   ∘ La passerelle de service du réseau esclave et le gestionnaire de mobilité du réseau maître ;
   ∘ Le gestionnaire de mobilité du réseau maître et le gestionnaire de mobilité du réseau esclave ;
   ∘ La passerelle de paquets du réseau maître et la passerelle de service du réseau esclave ;
- Configurer le réseau esclave pour qu'il utilise :
   ∘ La base de données utilisateurs du réseau maître ;
   ∘ Le gestionnaire de politique de communication du réseau maître.

Le réseau de communication selon l'invention peut être une bulle réseau autonome.

### LISTE DE FIGURES

Les figures sont présentées à titre indicatif et nullement limitatif de l'invention. Des figures différentes montrent des éléments identiques avec les mêmes références.

Les figures montrent :
- Figure 1 : une illustration fonctionnelle des bulles tactiques à fédérer, avant fédération ;
- Figure 2 : une illustration fonctionnelle des bulles tactiques à fédérer, après fédération ;
- Figure 3 : une illustration des étapes du procédé selon l'invention ;
- Figure 4 : une illustration de la mise en œuvre de l'invention pour deux bulles tactiques ;
- Figure 5 : une illustration de la mise en œuvre de l'invention pour deux bulles tactiques dont l'une propose à accès à un réseau externe ;
- Figure 6 : une illustration de la mise en œuvre de l'invention pour trois bulles tactiques ;
- Figure 7 : une illustration d'une fédération de selon l'invention via un réseau LTE tiers.

### DESCRIPTION DETAILLEE DE L'INVENTION

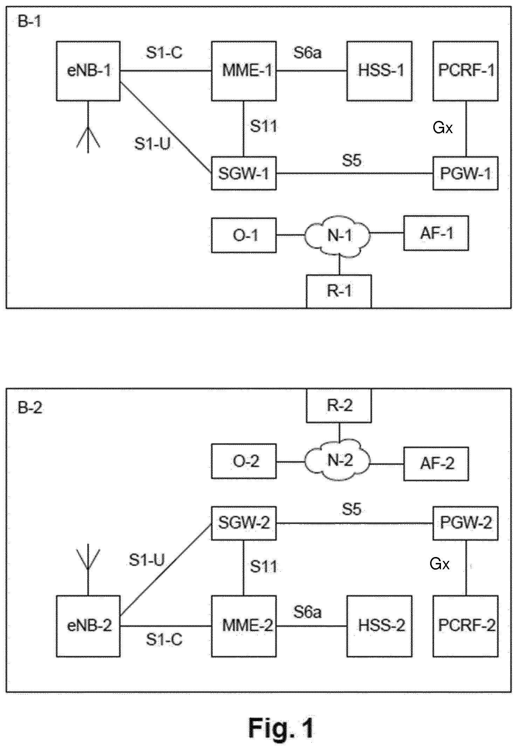

La figure 1 montre une première bulle tactique B-1. Dans la mise en œuvre décrite les réseaux considérés sont des réseaux LTE. La première bulle tactique B-1 comporte :
- Une première station de base évoluée eNB-1,
- Un premier gestionnaire de mobilité, ou MME pour « Mobility Management Entity ». Ce premier gestionnaire de mobilité est référencé MME-1 ;
- Une première passerelle de service, ou SGW pour « Serving Gateway ». Cette première passerelle de service est référencée SGW-1 ;
- Une première base de données utilisateurs, ou HSS pour « Home Subscriber Server », c'est à dire une base de données centrale qui contient des informations relatives aux utilisateurs de la première bulle tactique. Cette première base de données utilisateurs est référencé HSS-1 ;
- Une première passerelle de paquets, ou PGW pour « PDN Gateway », c'est à dire une passerelle de PDN « Packet Data Network ». Cette première passerelle de paquets est référencée PGW-1 ;
- Un premier gestionnaire de politique de communication, ou PCRF pour « Policy and Charging Rules Function », c'est à dire un gestionnaire qui fonctionne dans le cœur de réseau et permet d'accéder à des bases de données d'abonnés et d'autres fonctions spécialisées, comme un système de gestion de flux. Ce premier gestionnaire de politique de communication est référencé PCRF-1.

Dans ce document chaque élément décrit désigne un dispositif, réel ou virtuel, doté de capacités de traitement de données et de communication. Un tel dispositif exécute des codes instructions enregistrés dans une mémoire de programme dudit dispositif en fonction de paramètres. Ces paramètres sont soit enregistrés dans une mémoire de données dudit dispositif, soit reçus lors d'une communication effectuée par ledit dispositif.

On note qu'un même dispositif peut remplir plusieurs fonctions.

La figure 1 montre que la première bulle tactique B-1 comporte un premier réseau N-1 permettant l'interconnexion des éléments de la première bulle. En particulier le premier réseau permet l'établissement des liens permettant aux différents éléments de jouer leurs rôles dans la mise à disposition d'un réseau LTE via la première station de base. Un tel réseau est, entre autres, décrit par la norme 3GPP TS 23.401 définissant les spécifications pour le « General Packet Radio Service enhancements for Evolved Universal Terrestrial Radio Access Network (E-UTRAN) access » (c'est-à-dire les améliorations pour le réseau d'accès terrestre radio universel évolué du service radio paquet général (GPRS)). Ainsi la figure 1 montre aussi :
- Un premier lien de type S1-C entre la première station de base eNB-1 et le premier gestionnaire de mobilité MME-1 ;
- Un premier lien de type S1-U entre la première station de base eNB-1 et la première passerelle de service SGW-1 ;
- Un premier lien de type S11 entre le premier gestionnaire de mobilité MME-1 et la première passerelle de service SGW-1 ;
- Un premier lien de type S6a entre le premier gestionnaire de mobilité MME-1 et la première base de données utilisateurs HSS-1 ;
- Un premier lien de type S5 entre la première passerelle de service SGW-1 et la première passerelle de paquets PGW-1 ;
- Un premier lien de type Gx entre le premier gestionnaire de politique de communication PCRF-1 et la première passerelle de paquets PGW-1.

La figure 1 montre aussi que la première bulle tactique B-1 comporte, connecté au premier réseau N-1 :
- Un premier orchestrateur référencé O-1. Une mémoire de programme du premier orchestrateur comporte des codes instructions pour la mise en œuvre du procédé selon l'invention décrit plus loin ;
- Un premier routeur référencé R-1 ;
- Un premier serveur d'application, référencé AF-1.

La présence du premier serveur d'application correspond à une variante de l'invention dans laquelle la première bulle de traitement est dotée de capacités de traitement métier. De ce point de vu la présence, ou l'absence, d'un serveur d'application ne diminue ni n'augmente la capacité de bulles selon l'invention à se fédérer. Du point de vue d'une fédération de bulle, la présence d'un serveur d'application est donc optionnelle.

Les fonctions d'orchestrateur, dans le cadre de l'invention, sont :
- Assurer le mode découverte des bulles à fédérer.
- Identifier l'orchestrateur maitre et l'orchestrateur esclave ;
- Monter une liaison sécurisée entre les deux bulles
- Effectuer une sauvegarde de la configuration avant fédération au niveau de la bulle maitre (image base utilisateurs, configuration des éléments du cœur de réseau...)
- Récupérer ou synchroniser les données utilisateurs de la bulle esclave
- Mettre en place les interfaces de communications entre les équipements de la bulle esclave et de la bulle maitre.
- Une fois le paramétrage effectué, couper les liens avec les éléments surnuméraires ;
- Lorsque les bulles s'éloignent, revenir à la configuration d'origine.
- Un mécanisme de chien de garde (« watchdog ») consiste à effectuer un échange de message entre les deux orchestrateurs de type battement de cœur (« heartbeat ») ou maintient en vie (« keepalive »). Après une durée prédéfinie sans battement, chaque orchestrateur reconfigure l'ensemble des équipements de sa bulle en effectuant le cheminement inverse de la fédération.
- En particulier, l'orchestrateur maitre effectue une restauration de l'image de la base de données utilisateur maitre avant fédération.

La première bulle tactique telle que décrite est donc une bulle réseau autonome. C'est-à-dire que la première bulle tactique se suffit à elle-même pour permettre à des utilisateurs de communiquer entre eux. Une telle bulle est de plus transportable c'est-à-dire qu'elle peut être déployée sur n'importe quelle position géographique.

Le plan d'adressage des éléments de la première bulle tactique est statique et prédéterminé.

Une bulle tactique est donc composée au minimum d'un EPC (Evolved Packet Core), pour Cœur de Réseau Evolué, d'un couple HSS/PCRF et d'une eNodeB configurée en cellule LTE omnidirectionnelle.

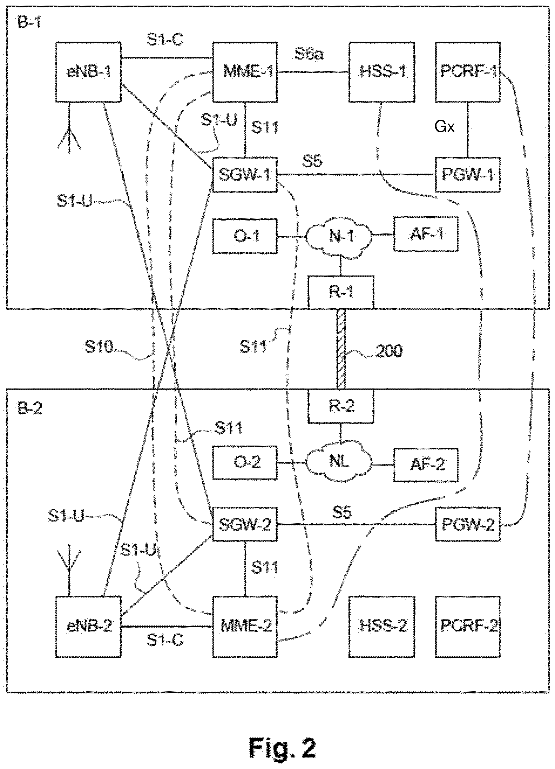

La figure 2 montre une deuxième bulle tactique B-2 identique à la première bulle tactique. La deuxième bulle tactique B-2 comporte :
- Une deuxième station de base évoluée eNB-2 ;
- Un deuxième gestionnaire de mobilité (MME-2) ;
- Une deuxième passerelle de service (SGW-2) ;
- Une deuxième base de données utilisateurs (HSS-2) ;
- Une deuxième passerelle de paquets (PGW-2) ;
- Un deuxième gestionnaire de politique de communication (PCRF-2).

La figure 1 montre que la deuxième bulle tactique B-2 comporte un deuxième réseau N-2 permettant l'interconnexion des éléments de la deuxième bulle. En particulier le deuxième réseau permet l'établissement des liens permettant aux différents éléments de jouer leurs rôles dans la mise à disposition d'un réseau LTE via la deuxième station de base eNB-2. Ainsi la figure 1 montre aussi :
- Un deuxième lien de type S1-C entre la deuxième station de base eNB-2 et le deuxième gestionnaire de mobilité MME-2 ;
- Un deuxième lien de type S1-U entre la deuxième station de base eNB-2 et la deuxième passerelle de service SGW-2 ;
- Un deuxième lien de type S11 entre le deuxième gestionnaire de service MME-2 et la deuxième passerelle de service SGW-2 ;
- Un deuxième lien de type S6a entre le deuxième gestionnaire de mobilité MME-2 et la deuxième base de données utilisateurs HSS-2 ;
- Un deuxième lien de type S5 entre la deuxième passerelle de service SGW-2 et la deuxième passerelle de paquets PGW-2 ;
- Un deuxième lien de type Gx entre le deuxième gestionnaire de politique de communication PCRF-2 et la deuxième passerelle de paquets PGW-2.

La figure 1 montre aussi que la deuxième bulle tactique comporte, connecté au deuxième réseau :
- Un deuxième orchestrateur référencé O-2,
- Un deuxième routeur référencé R-2 ;
- Un deuxième serveur d'application, référencé AF-2. Les remarques faîtes pour le premier serveur d'application sont également valables pour le deuxième serveur d'application.

Le plan d'adressage des éléments de la deuxième bulle tactique est statique et prédéterminé.

Dans une variante de l'invention les deux bulles tactiques ont le même plan d'adressage. Les communications entre les deux bulles tactiques se font via une traduction d'adresse réseau (c'est-à-dire un NAT pour « Network Address Translation ») une pour une réciproque au niveau des routeurs. De préférence des éléments identiques ont la même adresse hôte mais pas la même adresse réseau. Ainsi toute adresse locale des équipements et fonctions applicatives de chaque bulle est rendue unique par la mise en place sur l'interface extérieure des routeurs d'une règle de traduction d'adresse (règle NAT) se basant sur un identifiant représentatif de la bulle.

Dans un état initial la deuxième bulle tactique a été déployée et écoule du trafic permettant à ses utilisateurs de communiquer et d'accéder au deuxième serveur d'application via des équipements utilisateur connectés à la deuxième station de base.

Suite à une évolution de la situation une autre bulle tactique est déployée pour permettre de faire face à ladite évolution de la situation. Cette autre bulle tactique est celle ayant été décrite comme la première bulle tactique. Dans un premier temps la première bulle tactique est dans un état bloqué, c'est-à-dire qu'elle n'accepte aucune communication, via la première station de base, de la part d'utilisateurs.

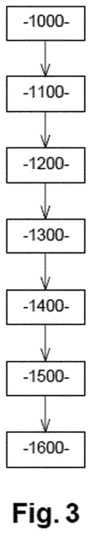

La figure 3 montre une étape 1000 de connexion dans laquelle on établit une connexion dédiée entre la première bulle tactique et la deuxième bulle tactique. Cette connexion dédiée peut aussi être qualifiée de locale. Cette connexion est réalisée entre le premier routeur et le deuxième routeur. Physiquement cette connexion dédiée est soit câblée, soit sans fil (Wireless en anglais). Une connexion câblée est par exemple une connexion Ethernet, une connexion sans fil est par exemple une connexion Wifi. Dans une variante de l'invention cette connexion dédiée peut aussi être réalisé via un réseau mobile tiers.

Dans une variante de l'invention l'établissement de la connexion dédiée détectée par les routeurs est suivi de l'établissement d'un tunnel chiffré entre ces routeurs. Un tel tunnel s'appelle un tunnel VPN. Ainsi toutes les communications transitant par les deux routeurs sont chiffrées et donc protégées contre une éventuelle interception. Il s'agit de l'établissement d'un réseau privé virtuel 200.

Une fois la connexion dédiée établie on passe à une étape 1100 d'élection d'un orchestrateur maître. Cette élection se fait suite à une découverte mutuelle. Par exemple une telle découverte entre orchestrateurs peut s'appuyer sur la version multicast du protocole Internet (protocole IP) et sur la notion de grappes (on parle aussi de clusters). Une adresse IP multicast est alors connue de toutes les bulles aptes à se fédérer ce qui permet de rejoindre la grappe qui s'auto organise ensuite.

L'élection d'un orchestrateur maître est un processus au cours duquel la bulle tactique comportant l'orchestrateur maître devient la bulle tactique de référence du réseau de communication fédéré. C'est-à-dire, ce sont les éléments de cœur de réseau de cette bulle tactique de référence qui vont contenir l'intégralité de la configuration du réseau LTE obtenu par fédération. Selon différentes variantes on peut envisager plusieurs critères d'élection :
- Capacité d'accueil : c'est la bulle tactique qui a la plus grande capacité d'accueil qui devient la bulle maître. Une capacité d'accueil est le nombre maximal d'équipements terminaux que la bulle peut gérer simultanément ;
- Capacité de traitement : capacité générique de la bulle tactique, cela inclue l'accueil et la puissance métier ;
- Date de déploiement : la première bulle, ou la dernière, selon une convention prédéterminée, devient la bulle maître ;
- Par tirage au sort,
- ... la liste n'est pas limitative.

Dans notre exemple c'est le premier orchestrateur qui est élu orchestrateur maître.

C'est au cours de cette étape d'élection que sont également décidées les valeurs des identifiants de chaque réseau, ainsi que des identifiants de zone utilisés pour la recherche de personnes (on dit aussi paging).

C'est également au cours de cette étape que la traduction d'adresse une pour une réciproque est mise en place. Dans une variante la mise en place de cette traduction d'adresse s'accompagne de la mise à jour d'enregistrement d dans l'annuaire de résolution de noms pour permettre la désignation d'élément, par exemple base de données utilisateurs ou du gestionnaire de politique de communication. Par exemple, vue de la bulle esclave, la base de données de la bulle maître se voit attribuer un nom qui peut être résolu en son adresse traduite. Une alternative serait d'utiliser directement une adresse.

Grâce à cette traduction et à cette résolution il est également possible de maintenir une continuité d'accès à des serveurs applicatifs quelle que soit la bulle à laquelle un équipement utilisateur est connecté.

Dans la pratique, chaque bulle tactique ayant un identifiant unique, on utilise généralement la valeur de cette identifiant pour dériver les valeurs uniques des autres paramètres de la bulle tactique, en particulier les adresses traduites, les identifiants de zones, les identifiants uniques des gestionnaires de mobilités, ... dans la fédération. Il s'agit donc d'un paramétrage par convention. Cette solution n'est qu'un exemple non limitatif. Cet identifiant unique est également utilisé lors de la découverte.

Une fois l'orchestrateur maître élu, donc la bulle tactique maître élue, on passe à une étape 1200 de mise à jour de la base de données utilisateurs de la bulle maître. Dans cette étape les orchestrateurs dialoguent pour copier le contenu de la base de données utilisateurs de la bulle esclave dans la base de données utilisateurs de la bulle maître. Cela permet à la bulle tactique maître de connaître l'intégralité des utilisateurs susceptibles de se connecter. Chaque utilisateur est associé, dans la base de données utilisateur, à sa bulle d'origine. Cela permet, par exemple, de revenir à un état initial de la base de données utilisateurs.

Dans une variante de réalisation, l'orchestrateur maitre effectue une sauvegarde par image de la base de données utilisateur avant l'étape 1200 de mise à jour avec la base de données de la bulle esclave afin de pouvoir restaurer la base de données utilisateurs dans sa configuration avant la mise en œuvre du procédé de fédération lorsque les bulles sont amenées à ne plus être fédérées.

Dans une variante, dans cette étape les orchestrateurs mettent également à jour la configuration du gestionnaire de politique de communication en fusionnant les configurations des deux gestionnaires de politique de communication. On passe alors à une étape 1300 de configuration des liens dans laquelle les orchestrateurs configurent des liens, selon la norme LTE, pour permettre aux éléments des deux bulles de fonctionner ensemble. Ces liens sont établis à travers la traduction d'adresse. Ainsi les orchestrateurs configurent :
- Un lien de type S11 entre la passerelle de service du réseau maître SGW-1 et gestionnaire de mobilité du réseau esclave MME-2 ;
- Un lien de type S11 entre la passerelle de service du réseau esclave SGW-2 et le gestionnaire de mobilité du réseau maître MME-1 ;
- Un lien de type S10 entre le gestionnaire de mobilité du réseau maître MME-1 et le gestionnaire de mobilité du réseau esclave MME-2 ;

On passe alors à une étape 1400 de mise à jour des stations de base en vue de leur coopération dans le réseau de communication fédérée. C'est-à-dire que l'on rend les stations de base apte à collaborer dans un réseau de communication unique.

Dans cette étape on met à jour chaque station de base afin que les deux stations de base puissent collaborer sur un handover. Il faut que chaque station de base connaisse au moins le « eNodeBID », le PCI et la TAC de l'autre station de base. Ces éléments sont connus comme les « relations de voisinage ».
- eNodeBID : identifiant de station de base ;
- PCI : Physical Cell Identity pour identifiant physique de cellule ;
- TAC : Tracking Area Code pour code de zone de traçage.

Il faut ainsi que chaque station de base ait un certain nombre de paramètres uniques dans le futur réseau fédéré : eNodeBID et PCI (PCI orthogonal pour limiter les interférences radio). Dans la pratique la valeur de ces paramètres et obtenue par convention comme précédemment décrit.

On passe alors à une étape 1500 de configuration des redondances ou, autrement dit, de configuration des éléments secondaires dans laquelle les orchestrateurs reconfigurent :
- Le gestionnaire de mobilité de la bulle tactique esclave pour que sa base de données utilisateurs secondaires soit la base de données utilisateur de la bulle tactique maître ;
- La passerelle de paquets de la bulle tactique esclave pour que son gestionnaire de politique de communication secondaire soit le gestionnaire de politique de communication de la bulle maître.

Cette reconfiguration des éléments secondaires se fait soit en déclarant dans les configurations une adresse, ou un nom. Dans une variante préférée on utilise un nom qui sera résolu conformément aux actions des étapes précédentes. Les étapes précédentes sont en particulier les étapes de mise en place de la traduction d'adresse et de mise à jour des enregistrements d'annuaires de résolution de noms. Un élément secondaire est un élément qui est utilisé, par exemple, en cas de non disponibilité d'un élément principal.

Ces configurations secondaires sont mises en place dans un réseau LTE standard pour assurer les exigences de résilience de ce type de réseau. Dans le cas de l'invention il s'agit de moyens fictifs (on entend par « fictif » des moyens détournés de leur finalité initiale) pour le cas des bulles tactiques. Dans le cas d'un réseau normal, ces configurations sont statiques et ne sont pas prévues pour être modifiées.

Dans le cas de l'invention, ce sont les orchestrateurs qui contrôlent dynamiquement le changement et la configuration de ces liens pointant vers des équipements secondaires et des fonctions applicatives.

A la fin de l'étape 1500 de configuration des redondances les orchestrateurs coupent les liens entre :
- Le gestionnaire de mobilité de la bulle tactique esclave et le serveur de base de données de la bulle tactique esclave
- La passerelle de paquets de la bulle tactique esclave est le gestionnaire de politique de communication de la bulle tactique esclave.

Ces coupures provoquent le basculement vers la configuration secondaire et donc l'utilisation, par les éléments de la bulle esclave, de la base de données utilisateurs de la bulle maître et du gestionnaire de politique de communication de la bulle maître.

On aboutit donc à un réseau fédéré tel que représenté par la figure 2. L'intégralité des utilisateurs des bulles maître et esclave est reconnu car la seule base de données utilisateurs connue du réseau de communication fédéré est celle dans laquelle on a recopié les utilisateurs de la bulle esclave.

Dans une variante, le procédé selon l'invention comporte aussi une étape 1600 de synchronisation des gestionnaires de mobilité et des passerelles de service pour qu'ils aient connaissance des contextes de communication existants et ainsi fluidifier les futurs transferts intercellulaires. Cette synchronisation permet aussi de déclarer dans chaque réseau les passerelles de service et les gestionnaires de mobilité. Dans la pratique, dans cette étape, il s'agit d'indiquer aux gestionnaires de mobilité l'existence de la zone de traçage de l'autre bulle ainsi que l'adresse ou le nom de la passerelle de service qui sert cette zone de traçage.

Dans l'invention, le cas échéant, les horloges des deux réseaux sont synchronisées.

A ce stade on peut débloquer la première bulle tactique, c'est à dire autoriser les communications via la première bulle tactique. On a donc ici réalisé une fédération de réseau LTE, c'est-à-dire permis à deux réseaux de communication de type LTE, ne se connaissant pas a priori, de fonctionner comme un seul réseau de communication.

Comme il reste possible d'associer chaque utilisateur à sa bulle tactique d'origine on peut aussi contrôler les accès aux serveurs d'application des bulles tactiques et plus généralement aux ressources des bulles tactiques. Il est donc possible d'interdire à un utilisateur ayant une bulle tactique d'origine définie d'accéder aux serveurs d'application d'une autre bulle n'étant pas la bulle tactique d'origine.

Dans une variante de l'invention tous les utilisateurs de tous les réseaux tactiques fédérés peuvent avoir accès à toutes les fonctions applicatives (AF) de tous les réseaux tactiques. Dans une autre variante, les utilisateurs n'ont accès qu'aux fonctions applicatives de leur réseau tactique d'origine. On peut aussi avoir tous les cas croisés.

L'orchestrateur joue le rôle de proxy pour les requêtes en résolution de nom de type DNS. Ainsi lors d'une demande d'accès aux fonctions applicatives (AF) par un équipement utilisateur, une requête DNS , est transmise à l'orchestrateur de la bulle A qui la transmet à un serveur de résolution de nom de type serveur DNS accessible et associée à la bulle A. Ce dernier renvoie l'adresse IP du serveur sur lequel est hébergée l'application à l'orchestrateur qui la renvoie à l'équipement utilisateur.

L'orchestrateur agissant comme proxy DNS, ce dernier peut répondre différemment par utilisateur pour chaque requête DNS émise par l'équipement utilisateur.

Il en est de même pour la bulle tactique B

Lors de la fédération de la bulle A avec la bulle B, on effectue une synchronisation des contextes DNS détenus par chaque orchestrateur par transfert des contextes DNS de la bulle esclave vers la bulle maitre et réciproquement. Cette opération peut être réalisée dans l'étape 1200 décrite précédemment.

L'invention permet de maintenir la segmentation des accès aux fonctions applicatives entre les équipements utilisateur de la bulle A et ceux de la bulle B. En effet, une requête DNS émise par un équipement utilisateur de la bulle A, élue bulle maitre à l'issue de l'étape de fédération, sera toujours traitée de la même façon que dans le cas où la bulle est autonome. Par contre, une requête DNS d'un équipement utilisateur de la bulle B sera transmise dans un premier temps à l'orchestrateur de la bulle A qui sera en mesure soit d'effectuer une résolution de nom vers son propre serveur DNS en raison de la synchronisation des contextes DNS réalisée lors de la fédération ou soit de relayer la requête à l'orchestrateur de la bulle esclave en fonction de l'équipement utilisateur ayant émis la requête.

On a ici décrit la fédération de deux bulles tactiques mais il est tout à fait possible de réaliser une fédération entre une bulle tactique est un réseau de communication pour terminaux mobiles d'une infrastructure fixe. Cela permet de garantir qu'une équipe d'intervention pourra communiquer sur toute l'étendue de l'infrastructure fixe tout en pouvant accéder à ses ressources spécifiques dans sa bulle tactique. Ces ressources spécifiques restent inaccessibles aux utilisateurs originaires du réseau de l'infrastructure fixe.

Dans la pratique, une fédération de réseaux de communication pour terminaux mobiles est un réseau de communication pour terminaux mobiles. Il est donc possible, grâce à l'invention de réaliser une fédération entre un réseau fédéré et un réseau de communication pour terminaux mobiles. L'invention ne se limite donc pas à la fédération de deux réseaux. En d'autres termes, avec l'invention, on peut fédérer deux réseaux de communication pour terminaux mobiles ou plus.

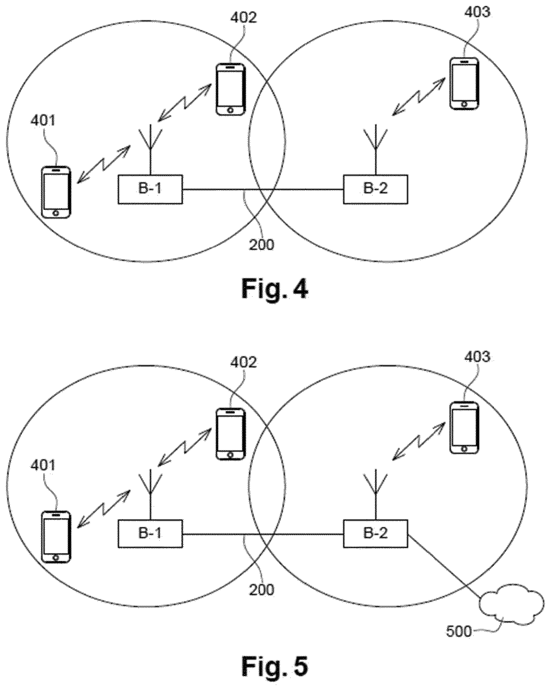

La figure 4 montre la première bulle tactique B-1 et la deuxième bulle tactique B-2 fédérées dans un contexte d'utilisation. La figure 4 montre :
- Un premier équipement utilisateur 401 connecté à la première bulle tactique B-1 ;
- Un deuxième équipement utilisateur 402 connecté à la première bulle tactique B-1 ;
- Un troisième équipement utilisateur 403 connecté à la deuxième bulle tactique B-2. Le troisième équipement utilisateur est de plus hors de portée de la station de base de la première bulle tactique.

Dans la pratique les équipements terminaux sont des téléphones intelligents ou des dispositifs assimilables, c'est-à-dire dire des dispositifs aptes à se connecter à un réseau de type LTE.

Grâce à l'invention le premier équipement utilisateur, ou le deuxième équipement utilisateur, peuvent établir une communication avec le troisième équipement utilisateur, ce qui serait impossible sans l'invention. Il peut donc profiter de l'union des couvertures radio.

On note qu'il en serait de même si le troisième équipement mobile était à portée de la station de base de la première bulle tactique. Dans ce cas il pourrait, toujours grâce à l'invention, utiliser la station de base de la première bulle tactique pour se connecter au réseau fédéré.

La figure 5 est identique à la figure 4 avec en plus une connexion entre la deuxième bulle tactique et un réseau 500 externe, par exemple le réseau Internet.

Dans ce cas, grâce à l'invention, le premier terminal utilisateur et le deuxième terminal utilisateur peuvent accéder au réseau externe.

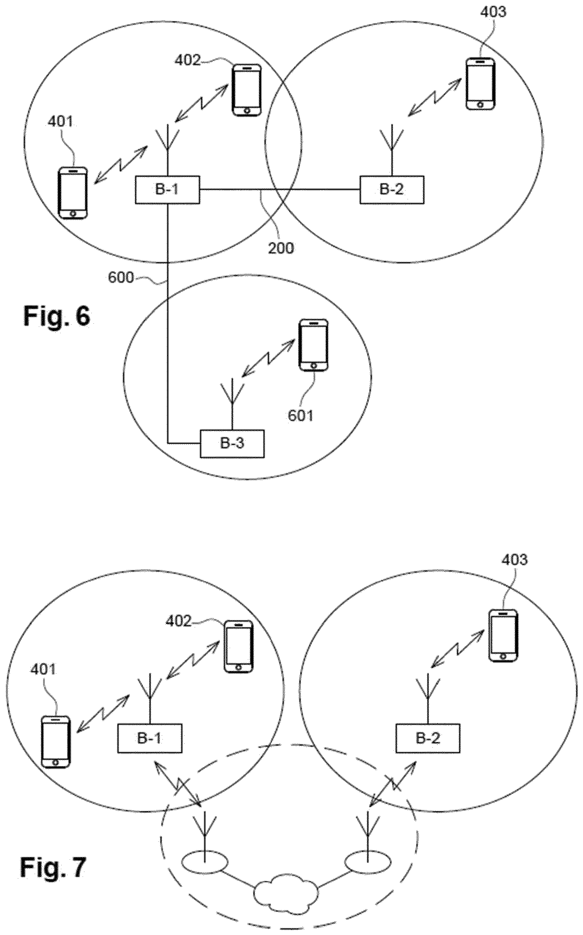

La figure 6 est identique à la figure 4 avec une plus une troisième bulle tactique B-3 fédéré avec la première bulle tactique B-1 via un lien dédié 600. La figure 6 montre également un quatrième équipement utilisateur 601 connecté à la troisième bulle tactique B-3.

Dans ce cas, grâce à l'invention, le troisième équipement utilisateur 403 peut établir une communication avec le quatrième équipement utilisateur 601.

La figure 7 est identique à la figure 4 sauf pour la connexion dédiée qui est réalisé via un réseau sans fil. Dans l'exemple de la figure 7 il s'agit d'un réseau de type LTE mais dans la pratique il pourrait d'agir d'un réseau Wifi. Dans ce cas chaque bulle tactique se connecte à un réseau LTE via une station de base dudit réseau LTE. Une fois ces connexions établies les bulles tactiques peuvent monter le tunnel VPN 200 à travers ces connexions.

## Revendications

1. Procédé de fédération d'un premier réseau (B-1) de communication pour terminaux mobiles et d'un deuxième réseau (B-2) de communication pour terminaux mobiles chaque réseau de communication comportant une station de base (eNB-1, eNB-2), un gestionnaire de mobilité (MME-1, MME-2), une passerelle de service (SGW-1, SGW-2), une base de données utilisateurs (HSS-1, HSS-2), un gestionnaire de politique de communication (PCRF-1, PCRF-2), une passerelle de paquet (PGW-1, PGW-2) chacun desdits réseaux comportant en outre un routeur (R-1, R-2) et un orchestrateur (O-1, O-2), le procédé comportant les étapes suivantes :
- Etablissement (1000) d'une connexion dédiée entre les deux réseaux de communication par l'établissement d'une connexion entre les routeurs ;
- Election (1100) d'un orchestrateur maître parmi les orchestrateurs des réseaux à fédérer, définissant un réseau maître et un réseau esclave ;
- Mise à jour (1200) de la base de données utilisateurs du réseau maître à partir de la base de données utilisateur du réseau esclave ;
- Configuration (1300) des liens entre :
∘ La passerelle de service du réseau maître et le gestionnaire de mobilité du réseau esclave ;
∘ La passerelle de service du réseau esclave et le gestionnaire de mobilité du réseau maître ;
∘ Le gestionnaire de mobilité du réseau maître et le gestionnaire de mobilité du réseau esclave ;
- Configuration (1500) du réseau esclave pour qu'il utilise :
∘ La base de données utilisateurs du réseau maître ;
∘ Le gestionnaire de politique de communication du réseau maître ;
- Mise à jour (1600) de la liste des passerelles de service de chaque réseau, chaque passerelle de service étant associée à un code de zone en fonction de son réseau d'origine ;
- Mise à jour (1600) de chaque gestionnaire de mobilité en fonction de la configuration du gestionnaire de mobilité du réseau voisin.

2. Procédé de fédération de réseaux de communication selon l'une des revendications précédentes **caractérisé en ce que** chaque réseau de communication a le même plan d'adressage le procédé comportant une étape dans laquelle le routeur de chaque réseau est dynamiquement configuré, par l'orchestrateur de son réseau, pour réaliser une traduction d'adresse une pour une réciproque entre les deux réseaux.

3. Procédé de fédération de réseaux de communication selon l'une des revendications précédentes **caractérisé en ce qu'**il comporte l'étape suivante :
- Mise à jour (1400) de chaque station de base en fonction de la station de base voisine.

4. Procédé de fédération de réseaux de communication selon l'une des revendications précédentes **caractérisé en ce que** l'établissement de la connexion dédiée est réalisé par l'utilisation d'un moyen de connexion appartenant à la liste formée d'au moins :
- Un câble,
- Une connexion sans fil.

5. Procédé de fédération de réseaux de communication selon l'une des revendications précédentes **caractérisé en ce que** les communications effectuées via la connexion dédiée le sont en utilisant un réseau privé virtuel.

6. Procédé de fédération de réseaux de communication selon l'une des revendications précédentes, **caractérisé en ce que** l'utilisation, par le réseau esclave, d'éléments du réseau maître se fait pas la configuration, dans les réseaux esclave des éléments secondaires.

7. Procédé de fédération de réseaux de communication selon la revendication 6 précédentes **caractérisé en ce que** la configuration des éléments de secondaires se fait par nommage, la résolution des noms étant configurée par l'orchestrateur du réseau au moment de la fédération.

8. Procédé de fédération de réseaux de communication selon l'une des revendications précédentes, **caractérisé en ce qu'**un réseau de communication pour terminaux mobile est une bulle réseau autonome.

9. Procédé de fédération de réseaux de communication selon l'une des revendications précédents, **caractérisé en ce que** l'élection de l'orchestrateur maître se fait en fonction des capacités d'accueil et de traitement de la bulle à laquelle appartient l'orchestrateur.

10. Procédé de fédération de réseaux de communication selon l'une des revendications précédents, **caractérisé en ce que** l'accès aux fonctions applicatives d'une bulle est maintenue et est limité à ses utilisateurs d'origine.

11. Réseau de communication pour terminaux mobiles, dit premier réseau, adapté pour être fédéré, avec un deuxième réseau de communication pour terminaux mobiles adapté pour être fédéré, un réseau de communication pour terminaux mobiles adapté pour être fédéré comportant une station de base, un gestionnaire de mobilité, une passerelle de service, une base de données utilisateurs, un gestionnaire de politique de communication, une passerelle de paquet chaque réseau de communication comportant en outre un routeur et un orchestrateur, ledit premier réseau de communication étant configuré pour:
- Etablir une connexion dédiée avec un deuxième réseau de communication par l'établissement d'une connexion dédiée entre le routeur du premier réseau et le routeur du deuxième réseau ;
- Elire un orchestrateur maître parmi les orchestrateurs des premier et deuxième réseaux à fédérer, définissant un réseau maître et un réseau esclave ;
- Mettre à jour de la base de données utilisateurs du réseau maître à partir de la base de données utilisateurs du réseau esclave ;
- Configurer des liens entre :
∘ La passerelle de service du réseau maître et gestionnaire de mobilité du réseau esclave ;
∘ La passerelle de service du réseau esclave et le gestionnaire de mobilité du réseau maître ;
∘ Le gestionnaire de mobilité du réseau maître et le gestionnaire de mobilité du réseau esclave ;
∘ La passerelle de paquets du réseau maître et la passerelle de service du réseau esclave ;
- Configurer le réseau esclave pour qu'il utilise :
∘ La base de données utilisateurs du réseau maître ;
∘ Le gestionnaire de politique de communication du réseau maître ;
- Mettre à jour la liste des passerelles de service de chaque réseau, chaque passerelle de service étant associée à un code de zone en fonction de son réseau d'origine ;
- Mettre à jour chaque gestionnaire de mobilité en fonction de la configuration du gestionnaire de mobilité du réseau voisin.

12. Réseau de communication selon la revendication 11 **caractérisé en ce qu'**il est une bulle réseau autonome.

## Patentansprüche

1. Verfahren zum Zusammenführen eines ersten Kommunikationsnetzes (B-1) für mobile Terminals und eines zweiten Kommunikationsnetzes (B-2) für mobile Terminals, wobei jedes Kommunikationsnetz eine Basisstation (eNB-1, eNB-2), einen Mobilitätsverwalter (MME-1, MME-2), eine Service-Gateway (SGW-1, SGW-2), eine Nutzerdatenbank (HSS-1, HSS-2) einen Kommunikationspolitik-Verwalter (PCRF-1, PCRF-1), ein Paket-Gateway (PGW-1, PGW-2) umfasst, wobei jedes der genannten Netze darüber hinaus einen Router (R-1, R-2) und einen Orchestrator (O-1, O-2) umfasst, wobei das Verfahren die folgenden Schritte umfasst:
- Aufbauen (100) einer dedizierten Verbindung zwischen den zwei Kommunikationsnetzen durch den Aufbau einer Verbindung zwischen den Routern;
- Wählen (1100) eines Master-Orchestrators aus den Orchestratoren der zusammenzuführenden Netze, der ein Master-Netz und ein Slave-Netz definiert;
- Aktualisieren (1200) der Nutzerdatenbank des Master-Netzes ausgehend von der Nutzerdatenbank des Slave-Netzes;
- Konfigurieren (1300) der Links zwischen:
∘ dem Service-Gateway des Master-Netzes und dem Mobilitätsverwalter des Slave-Netzes;
∘ dem Service-Gateway des Slave-Netzes und dem Mobilitätsverwalter des Master-Netzes;
∘ dem Mobilitätsverwalter des Master-Netzes und dem Mobilitätsverwalter des Slave-Netzes;
- Konfigurieren (1500) des Slave-Netzes, damit es verwendet:
∘ die Nutzerdatenbank des Master-Netzes;
∘ den Kommunikationspolitik-Verwalter des Master-Netzes;
- Aktualisieren (1600) der Liste der Service-Gateways jedes Netzes, wobei jedes Service-Gateway in Abhängigkeit von seinem ursprünglichen Netz einem Zonencode zugeordnet wird;
- Aktualisieren (1600) jedes Mobilitätsverwalters in Abhängigkeit von der Konfiguration des benachbarten Netzes.

2. Verfahren zum Zusammenführen von Kommunikationsnetzen gemäß einem der voranstehenden Ansprüche, **dadurch gekennzeichnet, dass** jedes Kommunikationsnetz dieselbe Adressierungsebene aufweist, wobei das Verfahren einen Schritt umfasst, bei dem der Router jedes Netzes vom Orchestrator seines Netzes dynamisch konfiguriert ist, um eine gegenseitige Adressenübersetzung jeweils nacheinander für die zwei Netze zu realisieren.

3. Verfahren zum Zusammenführen von Kommunikationsnetzen gemäß einem der voranstehenden Ansprüche, **dadurch gekennzeichnet, dass** es den folgenden Schritt umfasst:
- Aktualisieren (1400) jeder Basisstation in Abhängigkeit von der benachbarten Basisstation.

4. Verfahren zum Zusammenführen von Kommunikationsnetzen gemäß einem der voranstehenden Ansprüche, **dadurch gekennzeichnet, dass** der Aufbau der dedizierten Verbindung per Verwendung eines Verbindungsmittels realisiert wird, das zu der Liste gehört, die gebildet wird wenigstens aus:
- einem Kabel,
- einer drahtlosen Verbindung.

5. Verfahren zum Zusammenführen von Kommunikationsnetzen gemäß einem der voranstehenden Ansprüche, **dadurch gekennzeichnet, dass** die über die dedizierte Verbindung durchgeführten Kommunikationen unter Verwenden eines virtuellen privaten Netzes erfolgen.

6. Verfahren zum Zusammenführen von Kommunikationsnetzen gemäß einem der voranstehenden Ansprüche, **dadurch gekennzeichnet, dass** die Verwendung von Elementen des Master-Netzes durch das Slave-Netz durch die Konfiguration in den Slave-Netzen der sekundären Elemente erfolgt.

7. Verfahren zum Zusammenführen von Kommunikationsnetzen gemäß dem voranstehenden Anspruch 6, **dadurch gekennzeichnet, dass** die Konfiguration der sekundären Elemente per Benennung erfolgt, wobei die Auflösung der Namen durch den Orchestrator des Netzes zum Zeitpunkt der Zusammenführung erfolgt.

8. Verfahren zum Zusammenführen von Kommunikationsnetzen gemäß einem der voranstehenden Ansprüche, **dadurch gekennzeichnet, dass** ein Kommunikationsnetz für mobile Terminals eine autonome Netzblase ist.

9. Verfahren zum Zusammenführen von Kommunikationsnetzen gemäß einem der voranstehenden Ansprüche, **dadurch gekennzeichnet, dass** die Wahl des Master-Orchestrators in Abhängigkeit von den Aufnahme- und Verarbeitungskapazitäten der Blase erfolgt, zu der der Orchestrator gehört.

10. Verfahren zum Zusammenführen von Kommunikationsnetzen gemäß einem der voranstehenden Ansprüche, **dadurch gekennzeichnet, dass** der Zugang zu den Anwendungsfunktionen einer Blase beibehalten wird und auf seine ursprünglichen Nutzer beschränkt wird.

11. Kommunikationsnetz für mobile Terminals, bezeichnet als erstes Netz, das geeignet ist, um mit einem zweiten Kommunikationsnetz für mobile Terminals zusammengeführt zu sein, das geeignet ist, um zusammengeführt zu sein, wobei ein Kommunikationsnetz für mobile Terminals, das geeignet ist, um zusammengeführt zu sein, eine Basisstation, einen Mobilitätsverwalter, ein Service-Gateway, eine Nutzerdatenbank, einen Kommunikationspolitik-Verwalter, ein Paket-Gateway umfasst, wobei jedes Kommunikationsnetz darüber hinaus einen Router und einen Orchestrator umfasst, wobei das genannte erste Kommunikationsnetz konfiguriert ist zum:
- Aufbauen einer dedizierten Verbindung mit einem zweiten Kommunikationsnetz durch Aufbauen einer dedizierten Verbindung zwischen dem Router des ersten Netzes und dem Router des zweiten Netzes;
- Wählen eines Master-Orchestrators aus den Orchestratoren des ersten und des zweiten zusammenzuführenden Netzes, der ein Master-Netz und ein Slave-Netz definiert;
- Aktualisieren der Nutzerdatenbank des Master-Netzes ausgehend von der Nutzerdatenbank des Slave-Netzes;
- Konfigurieren der Links zwischen:
∘ dem Service-Gateway des Master-Netzes und dem Mobilitätsverwalter des Slave-Netzes;
∘ dem Service-Gateway des Slave-Netzes und dem Mobilitätsverwalter des Master-Netzes;
∘ dem Mobilitätsverwalter des Master-Netzes und dem Mobilitätsverwalter des Slave-Netzes;
∘ dem Paket-Gateway des Master-Netzes und dem Service-Gateway des Slave-Netzes;
- Konfigurieren des Slave-Netzes, damit es verwendet:
∘ die Nutzerdatenbank des Master-Netzes;
∘ den Kommunikationspolitik-Verwalter des Master-Netzes;
- Aktualisieren der Liste der Service-Gateways jedes Netzes, wobei jedes Service-Gateway in Abhängigkeit von seinem ursprünglichen Netz einem Zonencode zugeordnet wird;
- Aktualisieren jedes Mobilitätsverwalters in Abhängigkeit von der Konfiguration des Mobilitätsverwalters des benachbarten Netzes.

12. Kommunikationsnetz gemäß Anspruch 11, **dadurch gekennzeichnet, dass** es eine autonome Netzblase ist.

## Claims

1. Method for federating a first communication network (B-1) for mobile terminals and a second communication network (B-2) for mobile terminals, each communication network comprising a base station (eNB-1, eNB-2), a mobility manager (MME-1, MME-2), a serving gateway (SGW-1, SGW-2), a user database (HSS-1, HSS-2), a communication policy manager (PCRF-1, PCRF-2), a packet gateway (PGW-1, PGW-2), each of said networks further comprising a router (R-1, R-2) and an orchestrator (0-1,0-2), the method comprising the following steps:
- Establishing (1000) a dedicated connection between the two communication networks by establishing a connection between the routers;
- Electing (1100) a master orchestrator from among the orchestrators of the networks to federate, defining a master network and a slave network;
- Updating (1200) the user database of the master network from the user database of the slave network;
- Configuring (1300) the links between:
∘ The serving gateway of the master network and the mobility manager of the slave network;
∘ The serving gateway of the slave network and the mobility manager of the master network;
∘ The mobility manager of the master network and the mobility manager of the slave network;
- Configuring (1500) the slave network so that it uses:
∘ The user database of the master network;
∘ The communication policy manager of the master network.
- Updating (1600) the list of serving gateways of each network, each serving gateway being associated with a zone code as a function of its original network.
- Updating (1600) each mobility manager as a function of the configuration of the mobility manager of the neighbouring network.

2. Method for federating communication networks according to one of the preceding claims **characterised in that** each communication network has the same addressing plan, the method comprising a step in which the router of each network is dynamically configured, by the orchestrator of its network, to carry out a reciprocal one to one address translation between the two networks.

3. Method for federating communication networks according to one of the preceding claims **characterised in that** it comprises the following steps:
- Updating (1400) each base station as a function of the neighbouring base station;

4. Method for federating communication networks according to one of the preceding claims, **characterised in that** the establishment of the dedicated connection is made by the use of a connection means belonging to the list formed of at least:
- A wire,
- A wireless connection.

5. Method for federating communication networks according to one of the preceding claims, **characterised in that** communications made via the dedicated connection are made using a virtual private network.

6. Method for federating communication networks according to one of the preceding claims, **characterised in that** the use, by the slave network, of elements of the master network is done by the configuration, in the slave networks, of secondary elements.

7. Method for federating communication networks according to the preceding claim 6 **characterised in that** the configuration of the secondary elements is done by naming, the resolution of the names being configured by the orchestrator of the network at the moment of federation.

8. Method for federating communication networks according to one of the preceding claims, **characterised in that** a communication network for mobile terminals is a standalone network bubble.

9. Method for federating communication networks according to one of the preceding claims, **characterised in that** the election of the master orchestrator is done as a function of the hosting and processing capacities of the bubble to which the orchestrator belongs.

10. Method for federating communication networks according to one of the preceding claims, **characterised in that** access to the applicative functions of a bubble is maintained and is limited to its original users.

11. Communication network for mobile terminals, designated first network, suited to being federated, with a second communication network for mobile terminals suited to being federated, a communication network for mobile terminals suited to being federated comprising a base station, a mobility manager, a serving gateway, a user database, a communication policy manager, a packet gateway, each communication network further comprising a router and an orchestrator, said first communication network being configured to:
- Establish a dedicated connection with a second communication network by establishing a dedicated connection between the router of the first network and the router of the second network;
- Elect a master orchestrator from among the orchestrators of the first and second networks to federate, defining a master network and a slave network;
- Update the user database of the master network from the user database of the slave network;
- Configure links between:
∘ The serving gateway of the master network and the mobility manager of the slave network;
∘ The serving gateway of the slave network and the mobility manager of the master network;
∘ The mobility manager of the master network and the mobility manager of the slave network;
∘ The packet gateway of the master network and the serving gateway of the slave network;
- Configure the slave network so that it uses:
∘ The user database of the master network;
∘ The communication policy manager of the master network.
- Update the list of serving gateways of each network, each serving gateway being associated with a zone code as a function of its original network.
- Update each mobility manager as a function of the configuration of the mobility manager of the neighbouring network.

12. Communication network according to claim 11 **characterised in that** it is a standalone network bubble.
